# EUROPÄISCHE PATENTSCHRIFT

(11) **EP 3 807 699 B1**
(45) Veröffentlichungstag und Bekanntmachung des Hinweises auf die Patenterteilung: **13.09.2023**
(21) Anmeldenummer: 19731669.8
(22) Anmeldetag: 13.06.2019
(51) Int. Cl.: G02B 27/01

(54) **VERFAHREN ZUM ANSTEUERN EINES LICHTWELLENLEITERS UND GERÄT ZUM GENERIEREN EINES VIRTUELLEN BILDES**
METHOD FOR CONTROLLING AN OPTICAL FIBER AND APPARATUS FOR GENERATING A VIRTUAL IMAGE
PROCÉDÉ DE PILOTAGE D'UNE FIBRE OPTIQUE ET APPAREIL DE GÉNÉRATION D'UNE IMAGE VIRTUELLE

(30) Priorität: 15.06.2018 DE 102018209638
(43) Veröffentlichungstag der Anmeldung: 21.04.2021
(73) Patentinhaber: Continental Automotive Technologies GmbH, 30165 Hannover (DE)
(72) Erfinder: KERN, Thorsten Alexander, 65824 Schwalbach a. Ts. (DE)
(74) Vertreter: Continental Corporation
(86) Internationale Anmeldenummer: PCT/EP2019/065511
(87) Internationale Veröffentlichungsnummer: WO 2019/238826

(56) Entgegenhaltungen:
- EP-A1- 2 751 611
- EP-B1- 2 751 611

## Beschreibung

Die vorliegende Erfindung betrifft ein Verfahren zum Ansteuern eines Lichtwellenleiters nach Anspruch 1 und ein Gerät zum Generieren eines virtuellen Bildes nach Anspruch 5. Weitere vorteilhafte Ausgestaltungen sind durch die abhängigen Ansprüche definiert.

Unter einem Head-Up-Display, auch als HUD bezeichnet, wird ein Anzeigesystem verstanden, bei dem der Betrachter seine Blickrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-Up-Displays bestehen im Allgemeinen aus einem Bildgenerator, einer Optikeinheit und einer Spiegeleinheit. Der Bildgenerator erzeugt das Bild. Die Optikeinheit leitet das Bild auf die Spiegeleinheit. Der Bildgenerator wird oft auch als bildgebende Einheit oder PGU (Picture Generating Unit) bezeichnet. Die Spiegeleinheit ist eine teilweise spiegelnde, lichtdurchlässige Scheibe. Der Betrachter sieht also die vom Bildgenerator dargestellten Inhalte als virtuelles Bild und gleichzeitig die reale Welt hinter der Scheibe. Als Spiegeleinheit dient im Automobilbereich oftmals die Windschutzscheibe, deren gekrümmte Form bei der Darstellung berücksichtigt werden muss. Durch das Zusammenwirken von Optikeinheit und Spiegeleinheit ist das virtuelle Bild eine vergrößerte Darstellung des vom Bildgenerator erzeugten Bildes.

Der Betrachter kann das virtuelle Bild nur aus der Position der sogenannten Eyebox betrachten. Als Eyebox wird ein Bereich bezeichnet, dessen Höhe und Breite einem theoretischen Sichtfenster entspricht. So lange sich ein Auge des Betrachters innerhalb der Eyebox befindet, sind alle Elemente des virtuellen Bildes für das Auge sichtbar. Befindet sich das Auge hingegen außerhalb der Eyebox, so ist das virtuelle Bild für den Betrachter nur noch teilweise oder gar nicht sichtbar. Je größer die Eyebox ist, desto weniger eingeschränkt ist der Betrachter somit bei der Wahl seiner Sitzposition.

Die Größe des virtuellen Bildes herkömmlicher Head-Up-Displays wird durch die Größe der Optikeinheit begrenzt. Ein Ansatz zur Vergrößerung des virtuellen Bildes besteht darin, das von der bildgebenden Einheit kommende Licht in einen Lichtwellenleiter einzukoppeln. Das in den Lichtwellenleiter eingekoppelte Licht, das die Bildinformation trägt, wird an dessen Grenzflächen totalreflektiert und wird somit innerhalb des Lichtwellenleiters geleitet. Zusätzlich wird an einer Vielzahl von Positionen entlang der Ausbreitungsrichtung jeweils ein Teil des Lichts ausgekoppelt, so dass die Bildinformation über die Fläche des Lichtwellenleiters verteilt ausgegeben wird. Durch den Lichtwellenleiter erfolgt auf diese Weise eine Aufweitung der Austrittspupille. Die effektive Austrittspupille setzt sich hier aus Bildern der Apertur des Bilderzeugungssystems zusammen.

Vor diesem Hintergrund beschreibt die US 2016/0124223 A1 eine Anzeigevorrichtung für virtuelle Bilder. Die Anzeigevorrichtung umfasst einen Lichtwellenleiter, der bewirkt, dass von einer bildgebenden Einheit kommendes Licht, das durch eine erste Lichteinfallsfläche einfällt, wiederholt einer internen Reflexion unterzogen wird, um sich in einer ersten Richtung von der ersten Lichteinfallsfläche weg zu bewegen. Der Lichtwellenleiter bewirkt zudem, dass ein Teil des im Lichtwellenleiter geführten Lichts durch Bereiche einer ersten Lichtaustrittsfläche, die sich in der ersten Richtung erstreckt, nach außen austritt. Die Anzeigevorrichtung umfasst weiterhin ein erstes lichteinfallseitiges Beugungsgitter, das auftreffendes Licht beugt, um zu bewirken, dass das gebeugte Licht in den Lichtwellenleiter eintritt, und ein erstes lichtausfallendes Beugungsgitter, das vom Lichtwellenleiter einfallendes Licht beugt.

Bei aktuellen Head-Up-Displays auf Basis von Lichtwellenleitern werden anstelle einfacher Gitter Hologramme zum Einkoppeln und Auskoppeln genutzt. Dazu werden beispielsweise Hologramme verwendet, die in einer doppelbrechenden Flüssigkristallschicht eingebettet sind. Diese Flüssigkristallschicht ist elektrisch schaltbar. Eine typische Anwendung dafür ist das flächige Einschalten und Ausschalten der Flüssigkristallschicht, um bei der Verwendung von mehreren übereinander angeordneten Lichtwellenleitern das Einkoppeln entsprechend einer sequentiell arbeitenden Lichtquelle für mehrere Farben zu synchronisieren.

Schaltbare Volumenhologramme auf Basis einer doppelbrechenden Flüssigkristallschicht lassen sich beispielsweise unter Verwendung der Photopolymerisation eines Gemischs geeigneter Monomere mit Flüssigkristallmaterial herstellen. Hierfür wird das Gemisch in eine Zelle eingebracht, die durch parallele Glasplatten oder Kunststoffsubstrate gebildet wird. In der Zelle wird dann durch Überlagerung zweier Laserstrahlen ein Interferenzmuster erzeugt. In den hellen Bereichen des Interferenzmusters polymerisieren die Monomere schneller als in den dunklen Bereichen des Interferenzmusters. Während des Aufzeichnungsprozesses diffundieren dann weitere Monomere in die hellen Bereiche und bilden weitere Polymere. Gleichzeitig diffundieren weitere Flüssigkristalle in die dunklen Bereiche und bilden dort Mikrotröpfchen, sogenannte LC-Droplets. Auf diese Weise kommt es zu einer Phasentrennung in Form von Bereichen, die eine Vielzahl solcher Flüssigkristalltropfen aufweisen, und Bereichen, in denen im Wesentlichen Polymere vorliegen. Diese abwechselnden Bereiche bilden dann in der Flüssigkristallschicht eine Gitterstruktur in Form eines modulierten Brechungsindexprofils aus, an dem einfallendes Licht gebeugt werden kann.

An den Glasplatten bzw. Substraten der Zelle können transparente Elektroden, beispielsweise in Form einer ITO-Schicht (ITO: Indium Tin Oxide; Indiumzinnoxid), angeordnet sein, um ein elektrisches Feld über der Flüssigkristallschicht anlegen zu können und damit das Beugungsverhalten zu beeinflussen. Hierbei ändert sich die Orientierung der Flüssigkristalle in den Flüssigkristalltropfen, wodurch die Brechungsindexmodulation der Streifen verringert wird und bei einem geeigneten elektrischen Feld bzw. geeigneten Materialien durch eine Indexanpassung zwischen Flüssigkristallen und Polymeren sogar ganz verschwindet. Dies hat dann zur Folge, dass keine Ablenkung des einfallenden Lichts erfolgt. Aufgrund der geringen Größe der Flüssigkristalltropfen lassen sich hierbei kurze Umschaltzeiten erzielen. Zusätzliche Details zur Verwendung von Flüssigkristalltropfen für holographische Anwendungen finden sich in [1].

Durch die spezielle Form der Lichtleitung sind bestehende Systeme auf Basis von Lichtwellenleitern in ihrem Kontrastverhalten nicht optimal. Insbesondere kann der Fall auftreten, dass Licht, das als Streulicht unter ungünstigen Winkeln von der bildgebenden Einheit kommend eingekoppelt wird, im Lichtwellenleiter geleitet und dann unkontrolliert in unerwünschte Winkelbereiche ausgekoppelt wird.

EP2751611A1 beschreibt ein Near-Eye-Display umfassend einen Bildgenerator, der Strahlen über einen Winkelbereich zum Bilden eines virtuellen Bildes erzeugt, und einen Wellenleiter, der die Strahlen über einen begrenzten Winkelbereich transportiert.

Es ist eine Aufgabe der vorliegenden Erfindung, ein Verfahren zum Ansteuern eines Lichtwellenleiters und ein Gerät zum Generieren eines virtuellen Bildes bereitzustellen, die eine Verbesserung des Kontrastverhaltens ermöglichen.

Diese Aufgabe wird durch ein Verfahren zum Ansteuern eines Lichtwellenleiters nach Anspruch 1 und ein Gerät zum Generieren eines virtuellen Bildes nach Anspruch 5 gelöst.

Bevorzugte Ausgestaltungen der Erfindung sind Gegenstand der abhängigen Ansprüche.

Bei der erfindungsgemäßen Lösung ermöglicht es die Verwendung eines schaltbaren Einkoppelhologramms in Kombination mit einem Elektrodenarray anstelle einer einfachen Elektrode, das Einkoppeln von Licht in Teilbereichen des Einkoppelhologramms zu unterbinden. Da in diesen inaktiven Bereichen insbesondere auch kein Streulicht in den Lichtwellenleiter eingekoppelt werden kann, wird so die Menge des insgesamt eingekoppelten Streulichts minimiert. Die inaktiven Bereiche können dabei so festgelegt werden, dass die Bildwiedergabe durch das Anzeigegerät nicht gestört wird. Für das Ansteuern des Elektrodenarrays ist vorzugsweise eine Steuereinheit vorgesehen.

Gemäß einem Aspekt der Erfindung weist das Elektrodenarray eine Pixelstruktur auf, deren Pixel über eine Spannungsquelle schaltbar sind. Durch die Pixelstruktur ist es möglich, die Bereiche, in denen kein Licht in den Lichtwellenleiter eingekoppelt wird, sehr fein im Rahmen der Pixelauflösung festzulegen.

Gemäß einem Aspekt der Erfindung wird durch das Schalten eines Pixels eine aktive Schicht des Lichtwellenleiters befähigt, an einer dem Pixel zugeordneten Position des Einkoppelhologramms Licht in den Lichtwellenleiter einzukoppeln. Da eine aktive Schicht oftmals bereits vorhanden ist, kann die erfindungsgemäße Lösung durch die Nutzung dieser Schicht mit nur wenigen zusätzlichen Elementen und somit kostengünstig implementiert werden. Dabei können zwei Varianten realisiert werden. Bei einer ersten Variante kann das Licht dort eingekoppelt werden, wo keine Spannung anliegt. Bei einer zweiten Variante ist das Anliegen einer Spannung erforderlich, um das Licht einzukoppeln.

Gemäß einem Aspekt der Erfindung weist die aktive Schicht des Lichtwellenleiters Flüssigkristalltropfen auf. Derartige Flüssigkristalltropfen werden aktuell bereits für die Verwendung in Lichtwellenleitern für Head-Up-Displays eingesetzt, so dass die erfindungsgemäße Lösung ohne größeren Änderungsaufwand ergänzend umgesetzt werden kann. Zudem lassen sich Flüssigkristalltropfen sehr gezielt durch das Anlegen einer Spannung kontrollieren.

Gemäß einem Aspekt der Erfindung fallen die Bereiche, in denen kein Licht in den Lichtwellenleiter eingekoppelt wird, mit Bereichen eines anzuzeigenden Bildes zusammen, in denen sich keine darzustellenden Bildinhalte befinden. Da in diesen Bereichen ohnehin kein Licht für die Darstellung von Bildinhalten eingekoppelt werden muss, haben diese inaktiven Bereiche keine störenden Auswirkungen auf die Bilddarstellung.

Der Lichtwellenleiter ermöglicht es, Head-Up-Displays mit einem verbesserten Kontrastverhalten zu realisieren. Besonders vorteilhaft ist die Verwendung daher bei Head-Up-Displays, die in einer Umgebung genutzt werden, die einen hohen Kontrast erfordern. Dies ist beispielsweise bei der Verwendung in einem Kraftfahrzeug der Fall.

Vorzugsweise wird ein erfindungsgemäßes Gerät zum Generieren eines virtuellen Bildes in einem Fortbewegungsmittel eingesetzt, um ein virtuelles Bild für einen Bediener des Fortbewegungsmittels zu erzeugen. Bei dem Fortbewegungsmittel kann es sich beispielsweise um ein Kraftfahrzeug oder ein Luftfahrzeug handeln. Selbstverständlich kann die erfindungsgemäße Lösung auch in anderen Umgebungen oder für andere Anwendungen genutzt werden, z.B. in Lastkraftwagen, in der Bahntechnik und im ÖPNV, bei Kranen und Baumaschinen, etc.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Head-Up-Display gemäß dem Stand der Technik für ein Kraftfahrzeug;
- Fig. 2: zeigt einen Lichtwellenleiter mit zweidimensionaler Vergrößerung;
- Fig. 3: zeigt schematisch ein Head-Up-Display mit Lichtwellenleiter;
- Fig. 4: zeigt schematisch ein Head-Up-Display mit Lichtwellenleiter in einem Kraftfahrzeug;
- Fig. 5: zeigt einen erfindungsgemäßen Lichtwellenleiter mit einem Elektrodenarray;
- Fig. 6: zeigt schematisch ein anzuzeigendes Bild in Relation zu einer Pixelmatrix des Elektrodenarrays;
- Fig. 7: zeigt schematisch durch die Pixelmatrix des Elektrodenarrays realisierte inaktive Bereiche und aktive Bereiche; und
- Fig. 8: zeigt schematisch ein Verfahren zum Ansteuern des Lichtwellenleiters aus Fig. 5.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

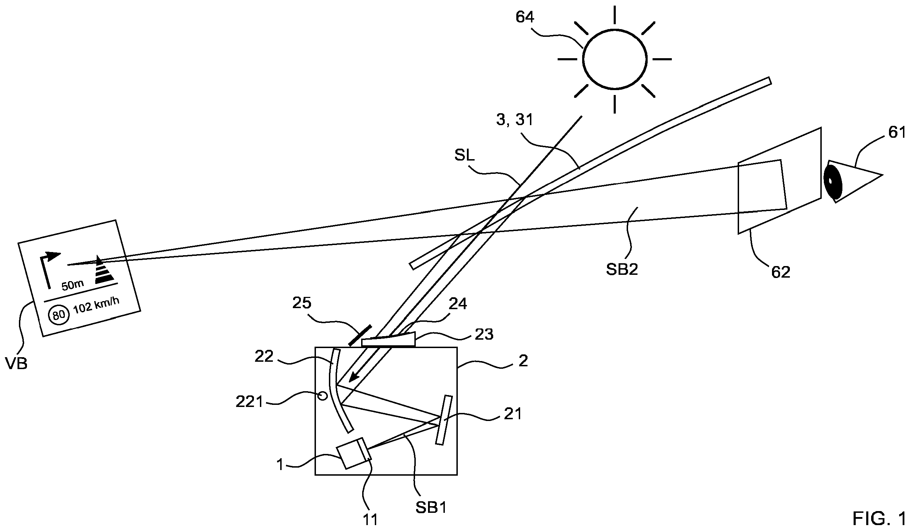

Zunächst soll anhand der Figuren 1 bis 4 der Grundgedanke eines Head-Up-Displays mit Lichtwellenleiter dargelegt werden.

Fig. 1 zeigt eine Prinzipskizze eines Head-Up-Displays gemäß dem Stand der Technik für ein Kraftfahrzeug. Das Head-Up-Display weist einen Bildgenerator 1, eine Optikeinheit 2 und eine Spiegeleinheit 3 auf. Von einem Anzeigeelement 11 geht ein Strahlenbündel SB1 aus, welches von einem Faltspiegel 21 auf einen gekrümmten Spiegel 22 reflektiert wird, der es Richtung Spiegeleinheit 3 reflektiert. Die Spiegeleinheit 3 ist hier als Windschutzscheibe 31 eines Kraftfahrzeugs dargestellt. Von dort gelangt das Strahlenbündel SB2 in Richtung eines Auges 61 eines Betrachters.

Der Betrachter sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 2 und Spiegeleinheit 3 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder gar nicht sichtbar. Je größer die Eyebox 62 ist, desto weniger eingeschränkt ist der Betrachter bei der Wahl seiner Sitzposition.

Die Krümmung des gekrümmten Spiegels 22 ist an die Krümmung der Windschutzscheibe 31 angepasst und sorgt dafür, dass die Bildverzeichnung über die gesamte Eyebox 62 stabil ist. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 62 und somit eine Anpassung der Position der Eyebox 62 an die Position des Auges 61. Der Faltspiegel 21 dient dazu, dass der vom Strahlenbündel SB1 zurückgelegte Weg zwischen Anzeigeelement 11 und gekrümmtem Spiegel 22 lang ist, und gleichzeitig die Optikeinheit 2 dennoch kompakt ausfällt. Die Optikeinheit 2 wird durch eine transparente Abdeckung 23 gegen die Umgebung abgegrenzt. Die optischen Elemente der Optikeinheit 2 sind somit beispielsweise gegen im Innenraum des Fahrzeugs befindlichen Staub geschützt. Auf der Abdeckung 23 befindet sich weiterhin eine optische Folie bzw. ein Polarisator 24. Das Anzeigeelement 11 ist typischerweise polarisiert und die Spiegeleinheit 3 wirkt wie ein Analysator. Zweck des Polarisators 24 ist es daher, die Polarisation zu beeinflussen, um eine gleichmäßige Sichtbarkeit des Nutzlichts zu erzielen. Ein Blendschutz 25 dient dazu, das über die Grenzfläche der Abdeckung 23 reflektierte Licht sicher zu absorbieren, sodass keine Blendung des Betrachters hervorgerufen wird. Außer dem Sonnenlicht SL kann auch das Licht einer anderen Störlichtquelle 64 auf das Anzeigeelement 11 gelangen. In Kombination mit einem Polarisationsfilter kann der Polarisator 24 zusätzlich auch genutzt werden, um einfallendes Sonnenlicht SL auszublenden.

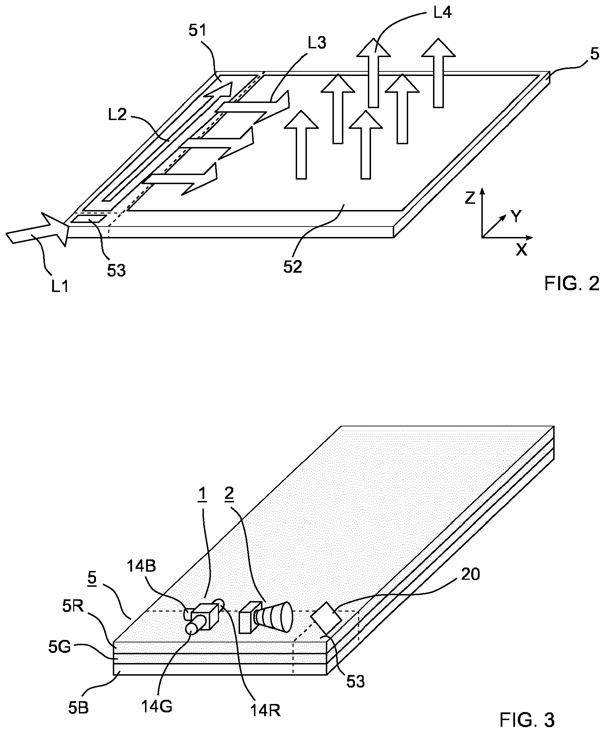

Fig. 2 zeigt in schematischer räumlicher Darstellung einen Lichtwellenleiter 5 mit zweidimensionaler Vergrößerung. Im unteren linken Bereich erkennt man ein Einkoppelhologramm 53, mittels dessen von einer nicht dargestellten bildgebenden Einheit kommendes Licht L1 in den Lichtwellenleiter 5 eingekoppelt wird. In diesem breitet es sich in der Zeichnung nach rechts oben aus, entsprechend dem Pfeil L2 . In diesem Bereich des Lichtwellenleiters 5 befindet sich ein Falthologramm 51, das ähnlich wie viele hintereinander angeordnete teildurchlässige Spiegel wirkt, und ein in Y-Richtung verbreitertes, sich in X-Richtung ausbreitendes Lichtbündel erzeugt. Dies ist durch drei Pfeile L3 angedeutet. In dem sich in der Abbildung nach rechts erstreckenden Teil des Lichtwellenleiters 5 befindet sich ein Auskoppelhologramm 52, welches ebenfalls ähnlich wie viele hintereinander angeordnete teildurchlässige Spiegel wirkt, und durch Pfeile L4 angedeutet Licht in Z-Richtung nach oben aus dem Lichtwellenleiter 5 auskoppelt. Hierbei erfolgt eine Verbreiterung in X-Richtung, sodass das ursprüngliche einfallende Lichtbündel L1 als in zwei Dimensionen vergrößertes Lichtbündel L4 den Lichtwellenleiter 5 verlässt.

Fig. 3 zeigt in räumlicher Darstellung ein Head-Up-Display mit drei Lichtwellenleitern 5R, 5G, 5B, die übereinanderliegend angeordnet sind und für je eine Elementarfarbe Rot, Grün und Blau stehen. Sie bilden gemeinsam den Lichtwellenleiter 5. Die in dem Lichtwellenleiter 5 vorhandenen Hologramme 51, 52, 53 sind wellenlängenabhängig, sodass jeweils ein Lichtwellenleiter 5R, 5G, 5B für eine der Elementarfarben verwendet wird. Oberhalb des Lichtwellenleiters 5 sind ein Bildgenerator 1 und eine Optikeinheit 2 dargestellt. Die Optikeinheit 2 weist einen Spiegel 20 auf, mittels dessen das vom Bildgenerator 1 erzeugte und von der Optikeinheit 2 geformte Licht in Richtung des jeweiligen Einkoppelhologramms 53 umgelenkt wird. Der Bildgenerator 1 weist drei Lichtquellen 14R, 14G, 14B für die drei Elementarfarben auf. Man erkennt, dass die gesamte dargestellte Einheit eine im Vergleich zu ihrer lichtabstrahlenden Fläche geringe Gesamtbauhöhe aufweist.

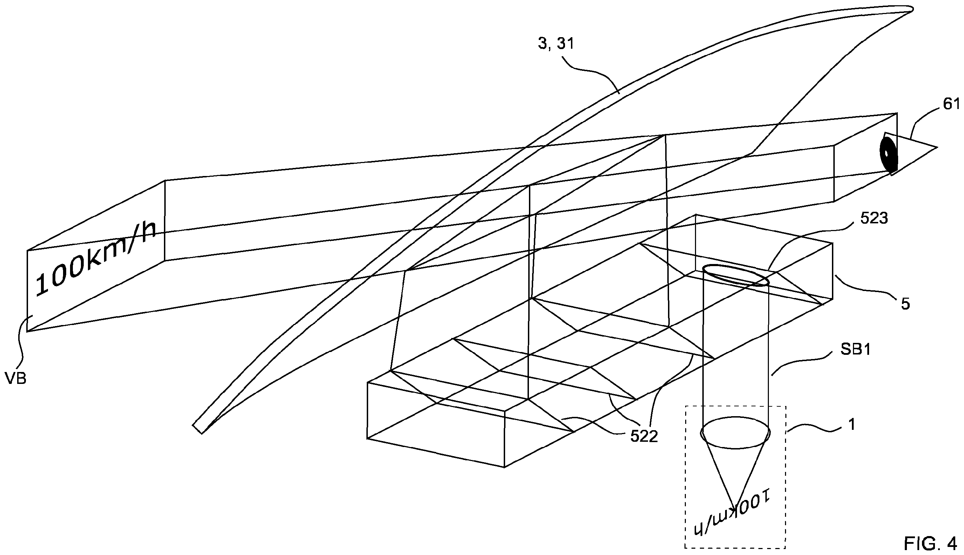

Fig. 4 zeigt ein Head-Up-Display in einem Kraftfahrzeug ähnlich zu Fig. 1, hier allerdings in räumlicher Darstellung und mit einem Lichtwellenleiter 5. Man erkennt den schematisch angedeuteten Bildgenerator 1, der ein paralleles Strahlenbündel SB1 erzeugt, welches mittels der Spiegelebene 523 in den Lichtwellenleiter 5 eingekoppelt wird. Die Optikeinheit ist der Einfachheit halber nicht dargestellt. Mehrere Spiegelebenen 522 reflektieren jeweils einen Teil des auf sie auftreffenden Lichts Richtung Windschutzscheibe 31, der Spiegeleinheit 3. Von dieser wird das Licht Richtung Auge 61 reflektiert. Der Betrachter sieht ein virtuelles Bild VB über der Motorhaube bzw. in noch weiterer Entfernung vor dem Kraftfahrzeug. Auch bei dieser Technologie ist die gesamte Optik in einem Gehäuse verbaut, dass von einer transparenten Abdeckung gegen die Umgebung abgegrenzt ist. Wie schon beim Head-Up-Display aus Fig. 1 kann auf dieser Abdeckung ein Retarder angeordnet sein.

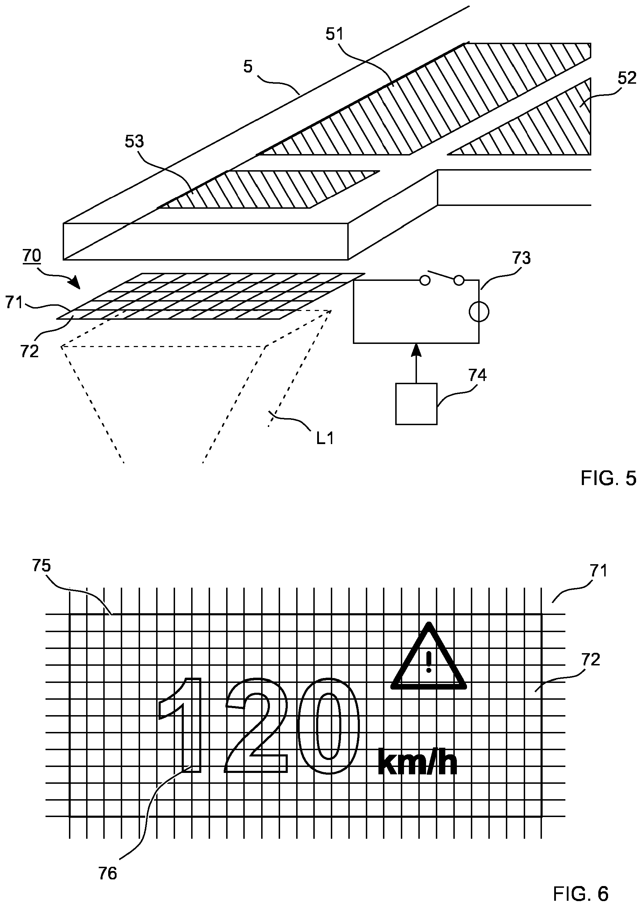

Fig. 5 zeigt einen erfindungsgemäßen Lichtwellenleiter 5 mit einem Einkoppelhologramm 53, einem Falthologramm 51 und einem Auskoppelhologramm 52. Das Einkoppelhologramm 53 ist mit einem Elektrodenarray 70 versehen. Das Elektrodenarray 70 weist eine Pixelmatrix 71 auf und kann beispielsweise in Form einer strukturierten ITO-Schicht mit Transistoren auf einem Glassubstrat realisiert sein. Die Pixel 72 der Pixelmatrix 71 können individuell geschaltet werden. Zu diesem Zweck können die Pixel 72 mit einer Spannungsquelle 73 verbunden werden, so dass sie eine Spannung gegenüber dem Einkoppelhologramm 53 des Lichtwellenleiters 5 erzeugen. Die Ansteuerung der Pixel 72 wird von einer Steuereinheit 74 vorgenommen. Durch das Schalten der Pixel 72 werden in der aktiven Schicht des Lichtwellenleiters 5 befindliche Flüssigkristalltropfen des Einkoppelhologramms 53 zum Einkoppeln des einfallenden Lichtes L1 in einen aktiven Teil des Lichtwellenleiters 5 befähigt, d.h. zu dessen Umlenkung oder Beugung. Dabei können zwei Varianten realisiert werden. Bei einer ersten Variante kann das Licht L1 dort eingekoppelt werden, wo keine Spannung anliegt. Bei einer zweiten Variante ist das Anliegen einer Spannung erforderlich, um das Licht L1 einzukoppeln.

Fig. 6 zeigt schematisch ein anzuzeigendes Bild 75 in Relation zur Pixelmatrix 71 des Elektrodenarrays. Dabei ist deutlich zu sehen, dass nur in einem verhältnismäßig kleinen Teil des anzuzeigenden Bildes 75 tatsächlich auch darzustellende Bildinhalte 76 vorhanden sind. In gezeigten Beispiel sind dies die Geschwindigkeitsangabe "120" mit der zugehörigen Maßeinheit "km/h" sowie ein Warnschild.

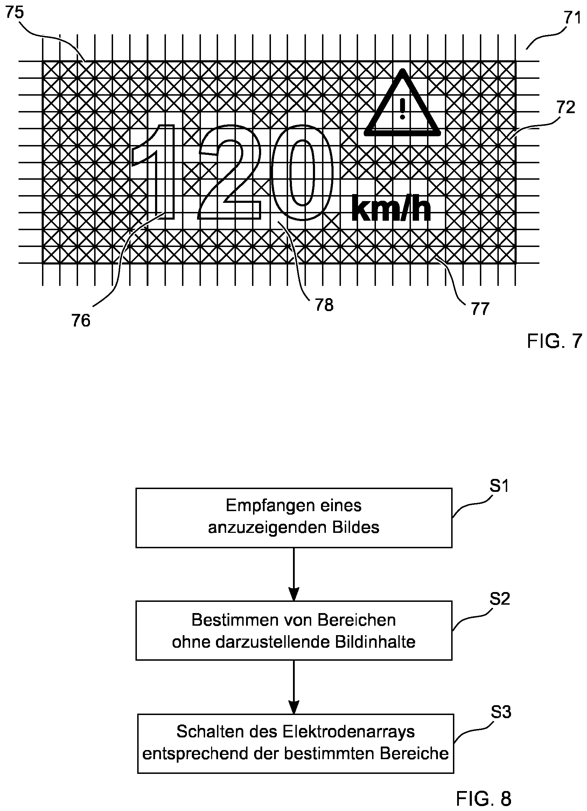

Fig. 7 zeigt schematisch durch die Pixelmatrix 71 des Elektrodenarrays realisierte inaktive Bereiche 77 und aktive Bereiche 78. Durch Beaufschlagung oder Wegnehmen von elektrischer Spannung bei einzelnen Pixeln 72 der Pixelmatrix 71 werden inaktive Bereiche 77 definiert, in denen kein Licht in den Lichtwellenleiter eingekoppelt wird. Ebenso werden aktive Bereiche 78 realisiert, in denen Licht in den Lichtwellenleiter eingekoppelt wird. Die Pixel 72 der Pixelmatrix 71 werden dabei so geschaltet, dass eine räumliche Zuordnung der aktiven Bereiche 78 zu den darzustellenden Bildinhalten 76 des anzuzeigenden Bildes 75 realisiert wird. Da nur in den aktiven Bereichen 78 Streulicht in den Lichtwellenleiter eingekoppelt werden kann, reduziert diese Maßnahme die Menge des insgesamt eingekoppelten Streulichts. In Fig. 7 folgen die Grenzen der inaktiven Bereiche 78 bzw. der aktiven Bereiche im Rahmen der Pixelauflösung der Pixelmatrix 71 genau den Konturen der darzustellenden Bildinhalte 76. Es kann aber auch vorgesehen sein, dass diese Grenzen durch Begrenzungsrahmen, auch als Bounding Boxes bezeichnet, definiert werden. Diese Begrenzungsrahmen können die individuellen darzustellenden Bildinhalte 76, Gruppen von darzustellenden Bildinhalten 76 oder die Gesamtheit der darzustellenden Bildinhalte 76 umschließen.

Fig. 8 zeigt schematisch ein Verfahren zum Ansteuern des Lichtwellenleiters aus Fig. 5. Das Verfahren kann beispielsweise von der in Fig. 5 dargestellten Steuereinheit durchgeführt werden. Alternativ kann aber auch ein Prozessor der bildgebenden Einheit für diesen Zweck genutzt werden, der dann entsprechende Anweisungen an die Steuereinheit ausgibt. In einem ersten Schritt wird ein anzuzeigendes Bild empfangen S1. Es werden dann Bereiche des anzuzeigenden Bildes bestimmt S2, in denen sich keine darzustellenden Bildinhalte befinden. Daran anschließend wird das Elektrodenarray des Lichtwellenleiters entsprechend der bestimmten Bereiche geschaltet S3, d.h. es werden gezielt Pixel der Pixelmatrix des Elektrodenarrays aktiviert oder deaktiviert.

### Bezugszeichenliste

- 1: Bildgenerator/Bildgebende Einheit
- 11: Anzeigeelement
- 14, 14R, 14G, 14B: Lichtquelle

- 2: Optikeinheit
- 20: Spiegel
- 21: Faltspiegel
- 22: Gekrümmter Spiegel
- 221: Lagerung
- 23: Transparente Abdeckung
- 24: Optische Folie/Polarisator
- 25: Blendschutz

- 3: Spiegeleinheit
- 31: Windschutzscheibe

- 5: Lichtwellenleiter
- 51: Falthologramm
- 52: Auskoppelhologramm
- 522: Spiegelebene
- 523: Spiegelebene
- 53: Einkoppelhologramm
- 54: Substrat
- 55: Deckschicht
- 56: Hologrammschicht

- 61: Auge/Betrachter
- 62: Eyebox
- 64: Störlichtquelle

- 70: Elektrodenarray
- 71: Pixelmatrix
- 72: Pixel
- 73: Spannungsquelle
- 74: Steuereinheit
- 75: Anzuzeigendes Bild
- 76: Darzustellender Bildinhalt
- 77: Inaktiver Bereich
- 78: Aktiver Bereich

- L1...L4: Licht
- S1: Empfangen eines anzuzeigenden Bildes
- S2: Bestimmen von Bereichen ohne darzustellende Bildinhalte
- S3: Schalten des Elektrodenarrays entsprechend der bestimmten Bereiche
- SB1, SB2: Strahlenbündel
- SL: Sonnenlicht
- VB: Virtuelles Bild

### Referenzen

[1] Y. J. Liu et al.: "Holographie Polymer-Dispersed Liquid Crystals: Materials, Formation, and Applications", Advances in OptoElectronics, Volume 2008, Article ID 684349.

## Patentansprüche

1. Verfahren zum Ansteuern eines Lichtwellenleiters (5) für ein Anzeigegerät, wobei mittels einer Steuereinheit (74) ein Elektrodenarray (70) zum Schalten eines schaltbaren Einkoppelhologramms (53) des Lichtwellenleiters (5) so angesteuert wird (S3), dass Bereiche (76) realisiert werden, in denen kein Licht (L1) in den Lichtwellenleiter (5) eingekoppelt wird, **dadurch gekennzeichnet, dass** die Bereiche (76) in denen kein Licht (L1) in den Lichtwellenleiter (5) eingekoppelt wird, mit Bereichen eines anzuzeigenden Bildes (75) zusammenfallen, in denen sich keine von einer bildgebenden Einheit (1) erzeugten Bildinhalte (76) befinden.

2. Verfahren gemäß Anspruch 1, wobei das Elektrodenarray (70) eine Pixelstruktur aufweist, deren Pixel über eine Spannungsquelle (73) geschaltet werden.

3. Verfahren gemäß Anspruch 2, wobei durch das Schalten eines Pixels eine aktive Schicht des Lichtwellenleiters (5) befähigt wird, an einer dem Pixel zugeordneten Position des Einkoppelhologramms (53) Licht (L1) in den Lichtwellenleiter (5) einzukoppeln.

4. Verfahren gemäß Anspruch 3, wobei die aktive Schicht des Lichtwellenleiters (5) Flüssigkristalltropfen aufweist.

5. Gerät zum Generieren eines virtuellen Bildes (VB), mit:
- einer bildgebenden Einheit (1) zum Erzeugen eines Bildes;
- einer Optikeinheit (2) zum Projizieren des Bildes auf eine Spiegeleinheit (3) zum Generieren des virtuellen Bildes (VB);
einem Lichtwellenleiter (5) zum Aufweiten einer Austrittspupille mit einem schaltbaren Einkoppelhologramm (53) und einem Elektrodenarray (70) zum Schalten des schaltbaren Einkoppelhologramms (53); und
- einer Steuereinheit (74), die eingerichtet ist, das Elektrodenarray (70) derart anzusteuern (S3), dass Bereiche (76) realisiert werden, in denen kein Licht (L1) in den Lichtwellenleiter (5) eingekoppelt wird, **dadurch gekennzeichnet, dass** die Bereiche (76) in denen kein Licht (L1) in den Lichtwellenleiter (5) eingekoppelt wird, mit Bereichen eines anzuzeigenden Bildes (75) zusammenfallen, in denen sich keine von einer bildgebenden Einheit (1) erzeugten Bildinhalte (76) befinden.

6. Gerät gemäß Anspruch 5, wobei das Elektrodenarray (70) eine Pixelstruktur aufweist, deren Pixel über eine Spannungsquelle (73) schaltbar sind.

7. Gerät gemäß Anspruch 6, wobei durch das Schalten eines Pixels eine aktive Schicht des Lichtwellenleiters (5) befähigt wird, an einer dem Pixel zugeordneten Position des Einkoppelhologramms (53) Licht (L1) in den Lichtwellenleiter (5) einzukoppeln.

8. Gerät gemäß Anspruch 7, wobei die aktive Schicht des Lichtwellenleiters (5) Flüssigkristalltropfen aufweist.

9. Fortbewegungsmittel mit einem Gerät gemäß einem der Ansprüche 5 bis 8 zum Generieren eines virtuellen Bildes (VB) für einen Bediener des Fortbewegungsmittels.

## Claims

1. Method for controlling an optical waveguide (5) for a display device, wherein an electrode array (70) for switching a switchable input-coupling hologram (53) of the optical waveguide (5) is controlled (S3) by means of a control unit (74) in such a way that regions (76) in which no light (L1) is coupled into the optical waveguide (5) are realized, **characterized in that** the regions (76) in which no light (L1) is coupled into the optical waveguide (5) coincide with regions of an image (75) to be displayed in which there are no image contents (76) generated by an imaging unit (1).

2. Method according to Claim 1, wherein the electrode array (70) has a pixel structure, the pixels of which are switched by way of a voltage source (73).

3. Method according to Claim 2, wherein the switching of a pixel enables an active layer of the optical waveguide (5) to couple light (L1) into the optical waveguide (5) at a position of the input-coupling hologram (53) that is assigned to the pixel.

4. Method according to Claim 3, wherein the active layer of the optical waveguide (5) comprises liquid crystal droplets.

5. Device for generating a virtual image (VB), comprising:
- an imaging unit (1) for generating an image;
- an optical unit (2) for projecting the image onto a mirror unit (3) for generating the virtual image (VB);
- an optical waveguide (5) for expanding an exit pupil with a switchable input-coupling hologram (53) and an electrode array (70) for switching the switchable input-coupling hologram (53); and
- a control unit (74) configured to control (S3) the electrode array (70) in such a way that regions (76) in which no light (L1) is coupled into the optical waveguide (5) are realized, **characterized in that** the regions (76) in which no light (L1) is coupled into the optical waveguide (5) coincide with regions of an image (75) to be displayed in which there are no image contents (76) generated by an imaging unit (1).

6. Device according to Claim 5, wherein the electrode array (70) has a pixel structure, the pixels of which are switchable by way of a voltage source (73).

7. Device according to Claim 6, wherein the switching of a pixel enables an active layer of the optical waveguide (5) to couple light (L1) into the optical waveguide (5) at a position of the input-coupling hologram (53) that is assigned to the pixel.

8. Device according to Claim 7, wherein the active layer of the optical waveguide (5) comprises liquid crystal droplets.

9. Means of transport comprising a device according to any of Claims 5 to 8 for generating a virtual image (VB) for an operator of the means of transport.

## Revendications

1. Procédé de commande d'une fibre optique (5) pour un appareil d'affichage, un réseau d'électrodes (70) étant excité (S3) au moyen d'une unité de commande (74) en vue de commuter un hologramme d'injection (53) commutable de la fibre optique (5) de telle sorte que sont réalisées des zones (76) dans lesquelles il n'y pas d'injection de lumière (L1) dans la fibre optique (5), **caractérisé en ce que** les zones (76) dans lesquelles il n'y pas d'injection de lumière (L1) dans la fibre optique (5) coïncident avec des zones d'une image (75) à afficher, dans lesquelles ne se trouvent aucun des contenus d'image (76) générés par une unité de production d'image (1).

2. Procédé selon la revendication 1, le réseau d'électrodes (70) possédant une structure à pixels dont les pixels sont commutés sur une source de tension (73).

3. Procédé selon la revendication 2, la commutation d'un pixel rendant une couche active de la fibre optique (5) apte à l'injection de lumière (L1) dans la fibre optique (5) à une position de l'hologramme d'injection (53) associée au pixel.

4. Procédé selon la revendication 3, la couche active de la fibre optique (5) possédant des gouttes de cristal liquide.

5. Appareil pour générer une image virtuelle (VB), comprenant :
- une unité de production d'image (1) destinée à générer une image ;
- une unité optique (2) destinée à projeter l'image sur une unité à miroir (3) en vue de générer l'image virtuelle (VB) ;
- une fibre optique (5) destinée à élargir une pupille de sortie comprenant un hologramme d'injection (53) commutable et un réseau d'électrodes (70) destiné à commuter l'hologramme d'injection (53) commutable ; et
- une unité de commande (74), qui est conçue pour exciter (S3) le réseau d'électrodes (70) de telle sorte que sont réalisées des zones (76) dans lesquelles il n'y pas d'injection de lumière (L1) dans la fibre optique (5), **caractérisé en ce que** les zones (76) dans lesquelles il n'y pas d'injection de lumière (L1) dans la fibre optique (5) coïncident avec des zones d'une image (75) à afficher, dans lesquelles ne se trouvent aucun des contenus d'image (76) générés par une unité de production d'image (1).

6. Appareil selon la revendication 5, le réseau d'électrodes (70) possédant une structure à pixels dont les pixels sont commutés sur une source de tension (73).

7. Appareil selon la revendication 6, la commutation d'un pixel rendant une couche active de la fibre optique (5) apte à l'injection de lumière (L1) dans la fibre optique (5) à une position de l'hologramme d'injection (53) associée au pixel.

8. Appareil selon la revendication 7, la couche active de la fibre optique (5) possédant des gouttes de cristal liquide.

9. Moyen de transport comprenant un appareil selon l'une des revendications 5 à 8 pour générer une image virtuelle (VB) pour un opérateur du moyen de transport.
